# EUROPEAN PATENT SPECIFICATION

(11) **EP 4 443 843 B1**
(45) Date of publication and mention of the grant of the patent: **18.11.2026**
(21) Application number: 24167080.1
(22) Date of filing: 27.03.2024
(51) Int. Cl.: H04L 45/24

(54) **FLEXIBLE LOAD BALANCING ON MULTIPATH NETWORKS**
FLEXIBLER LASTAUSGLEICH IN MEHRPFADNETZWERKEN
ÉQUILIBRAGE DE CHARGE FLEXIBLE SUR DES RÉSEAUX À TRAJETS MULTIPLES

(30) Priority: 04.04.2023 US 202318295783
(43) Date of publication of application: 09.10.2024
(73) Proprietor: Lemon Inc., Grand Cayman, KY1-1205 (KY)
(72) Inventor: SUN, Yan, Los Angeles, 90066 (US); ZHU, Hang, Los Angeles, 90066 (US); LI, Lishan, Los Angeles, 90066 (US); YE, Jianxi, Los Angeles, 90066 (US); SUN, Huan, Los Angeles, 90066 (US)
(74) Representative: Marks & Clerk LLP

(56) References cited:
- EP-A1- 3 522 479

## Description

### BACKGROUND

Multipath transport protocols enable multiple network paths to be used to send data for a single connection, thereby increasing throughput and bandwidth availability. Network traffic is distributed across the multiple network paths by load balancers, which enhances capacity and reliability of applications. Congestion controllers prevent or remove congestion along the paths by limiting the amount of data that can be sent at one time. However, as discussed below, opportunities remain for improvements in load balancing on multipath networks, particularly with respect to cooperation between load balancers and congestions controllers.

EP3522479A1 discloses techniques for multipath transmission, in particular to a multipath transmission system (500, 600, 1000), comprising: a first network entity (E1, 510, 610, 1010) configured to convert an input data stream (611, 1011) into a bundle of sub flows (521, 621, 1021) for transmission over a multipath transmission medium (522, 622, 1022); and a second network entity (E2, 520, 620, 1020) configured to reconvert the bundle of sub flows (521, 621, 1021) received via the multipath transmission medium (522, 1022) into an output data stream (623, 1023), wherein the conversion and reconversion are based on a network protocol (511, 1012) that provides congestion control without ensuring delivery nor in-order delivery of the bundle of sub flows (521, 621, 1021).

### SUMMARY

The invention is defined by the independent claims. Further embodiments of the invention are defined by the dependent claims.

### BRIEF DESCRIPTION OF THE DRAWINGS

FIG. 1 shows a schematic view of computing system for flexible load balancing on a multipath network, according to one embodiment of the present disclosure.
FIG. 2 shows an example of multipath forwarding implemented by the computing system of FIG. 1.
FIG. 3 shows a schematic view of communication between a load balancer and a congestion controller for each path of the computing system of FIG. 1.
FIG. 4 shows an example framework for a scheduler and the congestion controller between a sender and receiver for the computing system of FIG. 1.
FIG. 5 shows a queue model for packets on a path of the computing system of FIG. 1.
FIGS. 6A-6C show examples of load balancing across shared paths for the computing system of FIG. 1.
FIG. 7 shows a flow diagram of a method for flexible load balancing on a multipath network, which may be implemented by the computing system of FIG. 1 or other suitable hardware and software.
FIG. 8 shows a schematic view of an example computing environment in which the computing system of FIG. 1 may be enacted.

### DETAILED DESCRIPTION

Multipath transport protocol uses multiple network paths for a single connection. A benefit of this configuration is that bandwidth can be combined or "pooled" to yield high throughput and high availability time, as packets from a single message can be sent over several paths at the same time. In conventional multipath systems, a scheduler will send messages and/or packets on the path with the shortest, smoothest round trip time. However, the path with the shortest round trip time may have a higher packet loss rate than a path with a longer round trip time. For messages that prioritize a high rate of accuracy over a shortest time, the packet loss rate of the path with a shortest round trip time may be unacceptable. Additionally, the packets of a message may be sent equally across multiple paths, regardless of the message parameters. When a packet is lost or times out, the original path may be heavily congested or have a broken link, thereby requiring that the packet be re-sent on a different path, which may result in a longer message completion time, i.e., lag.

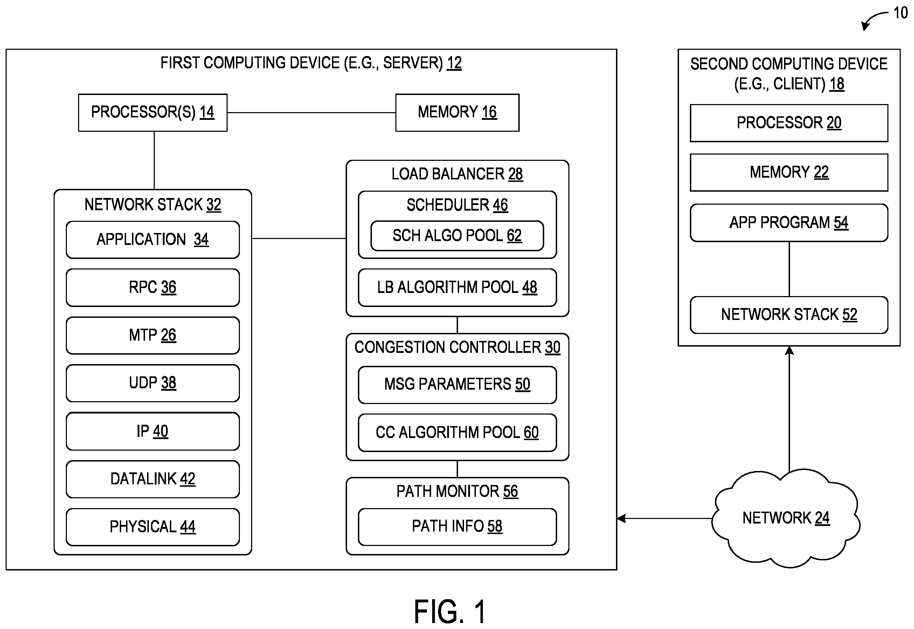

As schematically illustrated in FIG. 1, to address the above identified issues, a computing system 10 for flexible load balancing on a multipath network is provided. The computing system 10 is illustrated as comprising a first computing device 12 including one or more processors 14 and memory 16, and a second computing device 18 including one or more processors 20 and memory 22, with the first and second computing devices 12, 18 being in communication with one another via a network 24. The illustrated implementation is exemplary in nature, and other configurations are possible. In the description of FIG. 1 below, the first computing device will be described as a server computing device 12 and the second computing device will be described as a client computing device 18, and respective functions carried out at each device will be described. It will be appreciated that in other configurations, the first computing device could be a computing device other than server computing device 12. In some configurations, the computing system 10 may include a single computing device that carries out the salient functions of both the server computing device 12 and test computing device 18. In other alternative configurations, functions described as being carried out at the client computing device 18 may alternatively be carried out at the server computing device 12 and vice versa.

Continuing with FIG. 1, the server computing device 12 may, for example, take the form of an automated server hosted at an application data center, for example. Alternatively, the server computing device 12 may be configured to be hosted at a client-specified data center under control of the client, for performance, security, privacy, and/or export compliance reasons, for example. As discussed above, the server computing device 12 includes one or more processors 12 and associated memory 14. The one or more processors 12 are configured to execute instructions using portions of the associated memory 14 to implement a multipath transport protocol (MTP) 26, a load balancer 28, and a congestion controller 30. The MTP 26 is implemented as a transport layer in a network stack 32. The network stack 32 may further include an application layer 34, a remote procedure call (RPC) layer 36, a user datagram protocol (UDP) layer 38, an internet protocol (IP) layer 40, a datalink layer 42, and a physical layer 44.

As illustrated in FIG. 1, the MTP 26 is implemented on top of the UDP layer 38 of the network stack 32. The MTP 26 allows messages and/or packets to be sent simultaneously across a plurality of paths P of a multipath network between a sender and a receiver, i.e., the server computing device 12 and the client computing device 18.

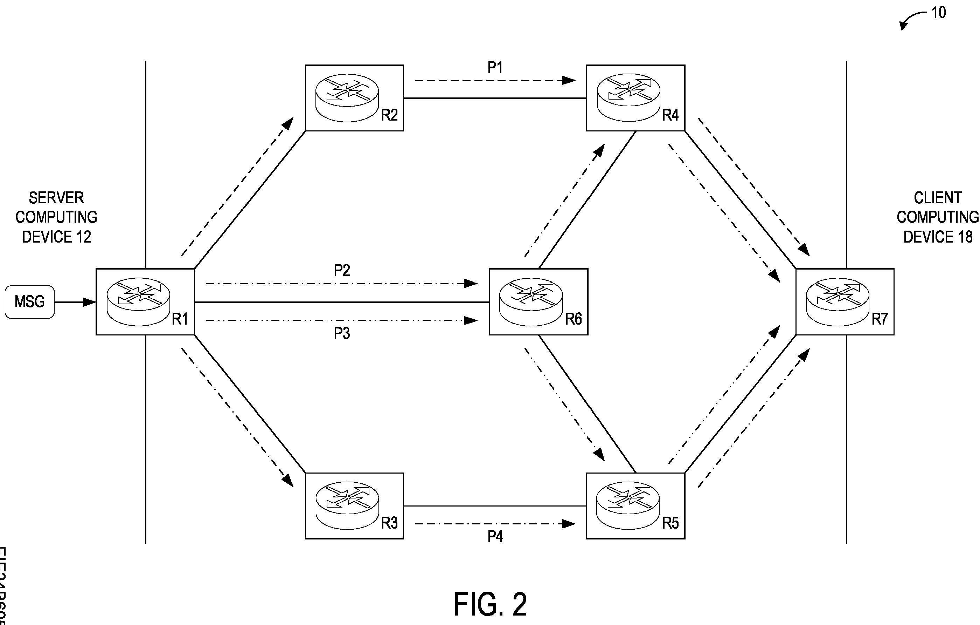

Turning briefly to FIG. 2, an example of a multipath network between the server computing device 12 and client computing device 18 of the computing system 10 is shown. As illustrated, there are multiple network paths P for a single connection. When receive side scaling (RSS), i.e., multi-queue receive, is enabled on a network interface controller (NIC), network receive processing is distributed across multiple receive queues, which allows inbound traffic to be processed by multiple devices. RSS selects a receive queue for each packet based on its heading to spread the traffic evenly across queues, and routing protocols at each router then split the flow of packets across multiple paths.

As such, in the illustrated example, packets of a message MSG are sent from the server computing device 12 via a first router R1 along a first path P1 (dashed line), a second path P2 (dash dot line), a third path P3 (dash dot dot line), and/or a fourth path P4 (dash dash dot line) to a seventh router R7 at the client computing device 18. P1 passes through the second and fourth routers R2, R4; P2 passes through the sixth and fourth routers R6, R4; P3 passes through the sixth and fifth routers R6, R5, and P4 passes through the third and fifth routers 3R, 5R. This approach enables high throughput and increased availability time. While the illustrated example shows four paths and seven routers, it will be appreciated that the multipath forwarding network may include any suitable number of paths and routers.

Returning to FIG. 1, the UDP layer 38 offers a best-effort message delivery service, but lacks any flow, congestion, or error control. The load balancer 28 is configured to distribute network traffic across the plurality of paths, and the congestion controller 30 controls the entry of messages and/or packets into the network to avoid congestion collapse. As described in detail herein, the load balancer 28 and the congestion controller 30 exchange information to determine a path or paths for a message and/or packets to be sent to the transport layer of the network stack 32.

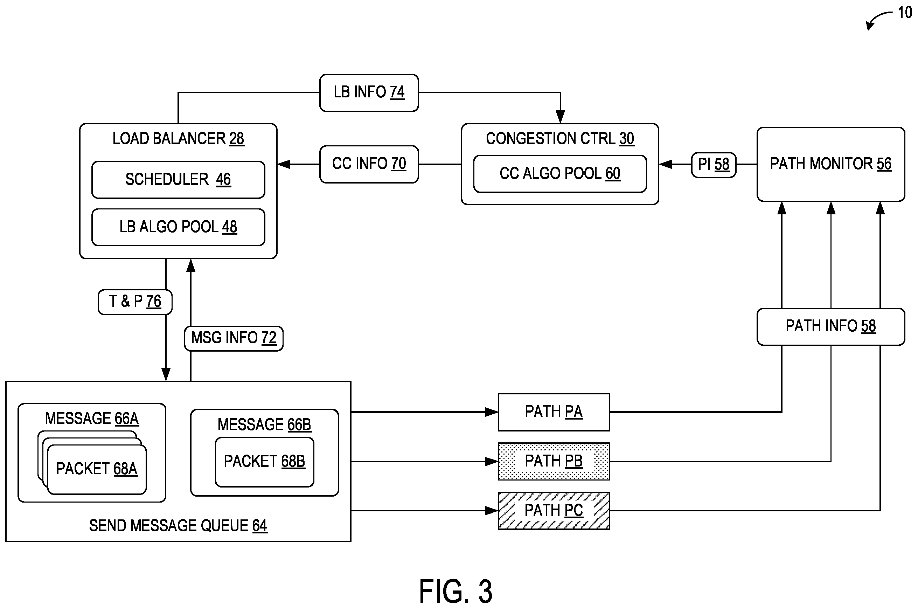

The load balancer 28 includes a scheduler 46 and a load balancer algorithm pool 48 comprising a plurality of load balancing algorithms. As described in detail below with respect to FIG. 3, the scheduler 46 receives information about a message, such as priority, packet loss awareness, size, accuracy requirements, and the like, for example, and sends the message information to the congestion controller 30. Based on the information received from the scheduler 46, the congestion controller 30 determines parameters 50 for the message and returns the message parameters 50 to the scheduler 46. The scheduler 46 then selects a load balancing algorithm from the load balancing algorithm pool 48 based on the message parameters 50. Based on the selected load balancing algorithm, the scheduler 46 determines a timing and a path for the message to be sent to the transport layer. The message is then sent from the server computing device 12 to a network stack 52 of the client computing device 18, where it interacts with an application program 54.

As shown in FIG. 1 and described in detail below with reference to FIG. 3, the server computing device 12 further includes a path monitor 56 that receives path information 58 for each path P in the multipath network. The path monitor 52 is further configured to select a congestion control algorithm for each path P from a congestion control algorithm pool 60 comprising a plurality of congestion control algorithms based on the path information 58. The selected congestion control algorithms determine a path status for each respective path P based on the path information 58. Also as shown in FIG. 1 and described in detail below, the scheduler 46 is configured to select a scheduling algorithm from a scheduling algorithm pool 62 comprising a plurality of scheduler algorithms based on a property of the message.

FIG. 3 shows a schematic view of communication between the load balancer 28 and the congestion controller 30 for each path P of the computing system 10. As illustrated, a message queue 64 includes messages 66A, 66B, each of which have a respective one or more packets 68A, 68B, and there are three paths PA, PB, PC by which the messages 66A, 66B and packets 68A, 68B can be sent. The path monitor 58 receives path information 58 for each path PA, PB, PC, such as a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate, for example. While the illustrated example includes one path monitor for all paths, it will be appreciated that each path may have an individual path monitor.

Based on the path information 58, the path monitor 56 selects a congestion control algorithm for each path PA, PB, PC from the congestion control algorithm pool 60 of the congestion controller 30. The selected congestion control algorithms determine a status of each path PA, PB, PC based on the path information 58. The congestion controller 30 sends congestion control information 70 for the status of each path, including the sending rate and congestion window, to the scheduler 46. The scheduler 46 then selects a load balancing algorithm from the load balancing algorithm pool 48, which determines if a message will be sent to the transport layer, and when the message is sent.

As discussed above, the scheduler 46 also receives message information 72 about the messages 68A, 68B, such as priority, packet loss awareness, size, accuracy requirements, and the like. This information is sent from the load balancer 28 to the congestion controller 30 as load balancing (LB) information 74, which may determine whether one or more of the selected congestion control algorithms and/or congestion control parameters needs to be changed, based on the message information 72. The scheduler 46 then determines a timing T and path P (T & P) 76 for each message and/or packet. As such, the communication between the load balancer 28 and the congestion controller 30 is a closed loop with positive feedback from the load balancer 28 to the congestion controller 30.

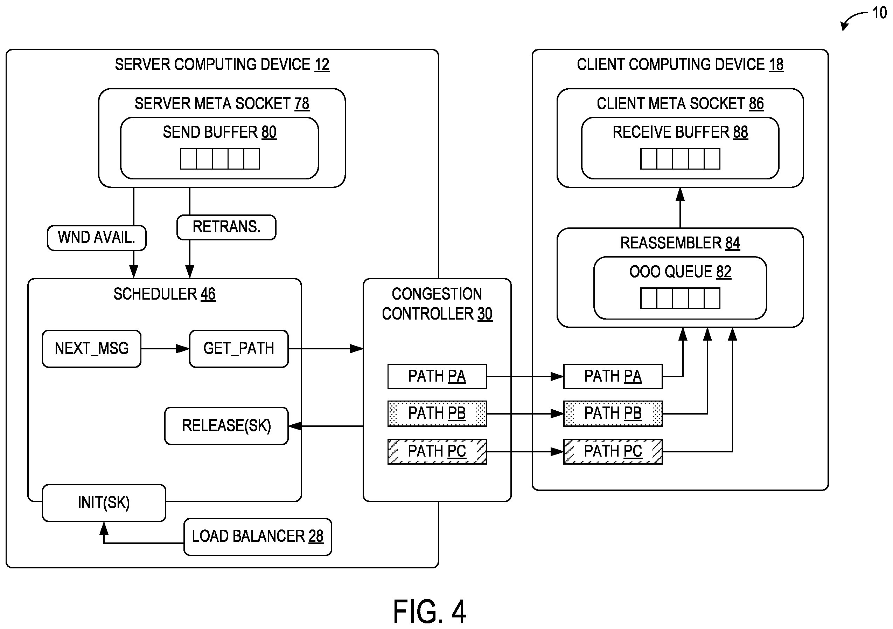

FIG. 4 shows an example framework for the scheduler 46 and the congestion controller 30 between the server computing device 12 and the client computing device 18. As illustrated, the server computing device 12 has a server meta socket 78 that includes a send buffer 80, i.e. a queue of messages to be sent. Upon processing a "next_message" command, the scheduler 46 is configured to receive one or more messages from the send buffer 80 and determine a path P or paths by which it is to be sent. The messages may be sent to the scheduler 46 based on window availability, or as a retransmission when the message fails to reach the network stack 52 of the client computing device 18.

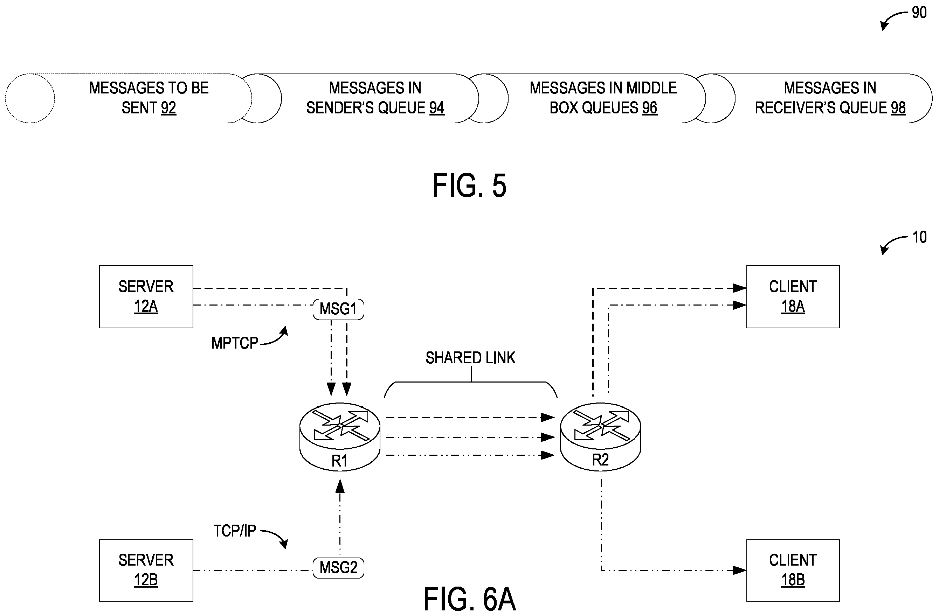

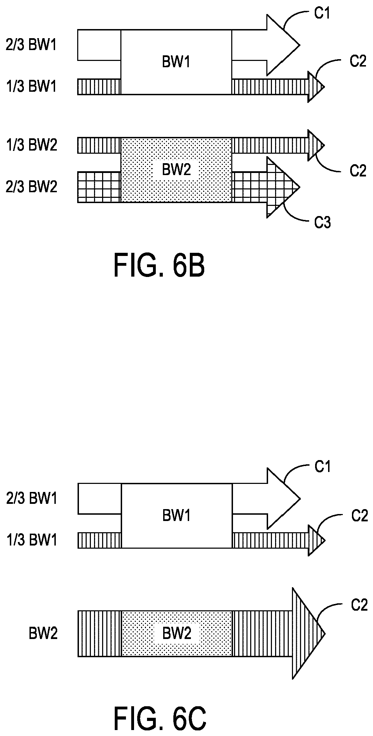

A "get_path" command is then processed at the scheduler 46 to return a path P for the message. The message is sent to the client computing device 18 on the determined path P via the congestion controller 30. As described below with reference to FIGS. 6A and 6B, one or more messages may be sent on multiple paths P and, consequently, arrive in a different order than that in which it was sent, forming an out of order (OOO) queue 82. A reassembler 84 rearranges the messages in the OOO queue 82 to restore the sent order and transmits them to a client meta socket 86 as a receive buffer 88.

When one or more additional paths P are required, the load balancer 28 may send an "init(sk)" command to the scheduler 46 to call for a new path P. Similarly, when a path P is no longer needed, the congestion controller 30 may send a "release(sk)" command to the scheduler 46 to close the unneeded path P.

A queue model 90 for messages on a path P from the server computing device 12 to the client computing device 18 is shown in FIG. 5. Messages to be sent 92 are waiting to enter the path, as indicated by the dashed line, while messages in the sender's queue 94, middle box queues 96, and receiver's queue 98 together determine the sending queue length. The current queue length *qᵢ* along the path can be estimated as shown below in Equation 1. ${q}_{i} = \frac{{cwnd}_{i}}{{RTT}_{i}} \left({RTT}_{i}-{RTT}_{i _ min}\right) + sending _ queue _ {length}_{i}$ (1)
where cwnd*ᵢ* is the congestion window for the ith path, RTT*ᵢ* is the round trip time (RTT) for the ith path, RTT_{*i*_*min*} is the minimum RTT for the ith path, as determined by the messages in the middle box queues 96 and the messages in the receiver's queue 98, and the sending queue length is determined by the sum of the messages in the sender's queue 94, middle box queues 96, and receiver's queue 98.

As described above, the scheduler selects a load balancing algorithm from the load balancer algorithm pool 48 that comprises a plurality of load balancing algorithms. The plurality of load balancing algorithms includes an earliest completion first algorithm, a delayed decision making algorithm, and a most stable path algorithm.

The earliest completion first algorithm is selected when the message information 72 indicates that the path along which the message can complete data transfer most efficiently is desired. This algorithm is based on message size and the smoothed sending rate, as shown below in Equation 2. ${C}_{i} = \frac{new _ message _ size + {q}_{i}}{Rate _ {smooth}_{i}}$ (2)
where C*ᵢ* is the time to complete the data transmission if the ith path is selected and the Rate_smooth is the smoothed sending rate. When a message size is small, it is more likely to be assigned to a path with a small total remaining messages size and a small RTT. In contrast, a large message is more likely to be assigned to a path with a large latest sending rate.

If all paths are full and cannot accept more messages, a delayed decision making algorithm may be selected. The time to complete the data transmission for the message on the ith path may be estimated as shown below in Equation 3. ${C}_{i} = \frac{{q}_{i}}{Rate _ {smooth}_{i}}$ (3)

When network conditions suddenly change and/or when the application receiving buffer is small, the scheduler 46 can cancel the transmission of low-importance messages to prioritize the transport of priority messages. It will be appreciated that the whole message is considered, rather than a single packet, and the message completion time includes the time required to transfer files and frames for the application.

When packet loss awareness and accuracy are important, a most stable path algorithm may be selected. The most stable path may be determined based on RTT stability, as shown below in Equation 4. $RTT _ {V}_{i} = \frac{{\sum }_{i = 0}^{n - 1} {\left({RTT}_{i}-{RTT}_{smooth}\right)}^{2}}{n - 1}$ (4)
where Vi is the variance of the ith path.

Additionally or alternatively, the most stable path may be determined based on sending rate stability, as shown below in Equation 5. $Rate _ {V}_{i} = \frac{{\sum }_{i = 0}^{n - 1} {\left({Rate}_{i}-{Rate}_{smooth}\right)}^{2}}{n - 1}$ (5)

In addition to the above LB algorithms, scheduling algorithms may also be used for flexible load balancing for a multipath network. These algorithms may be selected from the scheduling algorithm pool 62 based on a property of the message.

When priority is not a factor, a round robin scheduling algorithm may be used. An algorithm for a weighted round robin may be based on the smoothed sending rate, as shown below in Equation 6. ${W}_{i} = Rate _ {smooth}_{i}$ (6)
where Wi is the weight of the ith path and is equal to a value of the smoothed sending rate of the ith path. Additionally or alternatively, an algorithm for a weighted round robin may be based on the space left in the congestion window, as shown below in Equation 7. ${W}_{i} = CNDW _ {left}_{i}$ (7)
where Wi is the weight of the ith path and is equal to a value of the space left in the congestion window of the ith path (CNDW_left*i*).

Other scheduling algorithms may be used to select a path with the minimum total size or number of packets in the queue, a path with the least amount of packet loss in a recent number of round trips, a path with the minimum latest RTT, and/or a path with the minimum smoothed RTT, for example.

As discussed above, the path monitor 52 selects a congestion control algorithm for each path P from the congestion control algorithm pool 60 based on the path information 58. The path information may include a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate, for example.

An average RTT for a path may be determined based on the smoothed RTT of the path over a period of time, as shown below in Equation 8. $RTT _ smooth : = α \times RTT _ latest + \left(1-α\right) \times RTT _ smooth$ (8)
where RTT_latest is the most recently tested RTT and 0 < *α* < 1, and is used to adjust the history impaction. When *α* = 1, only the RTT_latest is considered.

Similarly, the average sending rate on a path may be determined based on the smoothed sending rate of the path without congestion, as shown below in Equation 9. $SendRate _ smooth : = α \times SendRate _ latest + \left(1-α\right) \times SendRate _ smooth$ (9)
where SendRate_smooth is the average sending rate, which indicates potential bandwidth, and SendRate_latest is the most recent sending rate on the path without congestion.

End-to end queue length samples can be used to detect congestion. The current queue length can be estimated as shown below in Equation 10. $q = \frac{w}{RTT} \left(RTT-{RTT}_{min}\right)$ (10)
where w is the size of the congestion control window, RTT is the sampled RTT time, and RTT*ₘᵢₙ* is the minimum observed RTT, which is used as an estimate of network propagation delay.

When an acknowledgement (ACK) is transmitted to the server computing device 12 to indicate that all packets of a message were received at the client computing device 18, the current network queue length *q* of a path can be estimated as described above with reference to Equation 1 and compared to a threshold T queue length. ACKs for packets that were transmitted over a path with a current queue length q greater than the threshold T queue length are tagged with a congestion marker. When all packets from a same window are acknowledged, the congestion can be calculated, as shown below in Equation 11. $F : = \frac{\left(# of ACKs with q>T\right) + # of ECN}{total # of ACKs in a window}$ (11)
where F is the percentage of paths that are congested, and ECN is an explicit congestion notification. An exponential moving average (EMA) filter can then be applied to determine the network congestion level, as shown below in Equation 12.$C : = α \times F + \left(1-α\right) \times C$ (12)
where C is the network congestion level and 0 *< α* < 1, and is used to adjust the history impaction. When *α* = 1, only the current congestion level is considered.

The congestion window for a path can be updated for each RTT according to the network congestion level indicated by C, as shown below in Equation 13. ${ω}_{i} : = \left\{\begin{matrix}{ω}_{i} - {ω}_{i} \times \frac{C}{2} , & if F > 0 , \\ {ω}_{i} + \frac{1}{{ω}_{i}} , & if F = 0 \\ \frac{{ω}_{i}}{2} , & if packet loss\end{matrix}\right.$ (13)
where *ωᵢ* is the congestion level for the ith path.

Thus, when network congestion is at a low level, the window is reduced by a small value; otherwise, the window is reduced significantly to alleviate high network congestion.

FIG. 6A shows an example of a shared link for messages sent according to different transport protocols. In the illustrated example, a first server computing device 12A is sending a first message MSG1 to a first client computing device 18A via MTP, as indicated by the dashed and dash dot lines. A second server computing device 12B is sending a second message MSG2 to a second client computing device 18B via TCP, as indicated by the dash dot dot line. The messages MSG1, MSG2 are routed through a first router R1 and a second router R2 before being delivered to the respective client computing devices 18A, 18B. As indicated, the connection between the routers R1, R2 is a shared link. When a multipath connection shares a link with a single path connection, such as TCP, the TCP connection may be starved if the bandwidth is not shared fairly.

To address this, when the server computer device 12 implementing a multipath transport protocol receives an ACK, the congestion controller 30 is configured to increase the congestion window size by 1/n, with n being the number of paths. When the number of paths is large, the small congestion window of each path leads to an increased probability of timing out, increased latency, an increased possibility of OOO, high hardware resource usage, and throughput degradation. The number of paths is dynamically decided by these parameters. Each connection has a priority value, with the default value being 1. Each new connection registers its priority value, and the sum of priority value is recorded. The congestion controller 30 receives resource usage and the priority sum and configures the optimal number of path, as shown below in Equation 14. $optimal _ {PathNum}_{i} : = α \times \frac{priority}{total _ priority} \times total _ resource$ (14)
where the default value of a is 0.8. The negotiated path number must meet the requirements of both endpoints, i.e., client computing devices 18A, 18B. This is determined as shown below in Equation 15. $\begin{matrix}negotiated _ {PathNum}_{i} \\ : = min \left\{optimal_{PathNum}_{i},optimal_{PathNum}_{i}^{′}\right\}\end{matrix}$ (15)

Updates to the resource usage are periodically sent to the congestion controller 30, which adjusts the number of paths in its connection as needed.

FIGS. 6B and 6C show examples of fairness between connections C. As illustrated in FIG. 6B, a connection C1 requires 2/3 of a first bandwidth BW1. The remaining 1/3 BW1 is allocated to a first portion of a second connection C2. The second portion of the second connection C2 uses 1/3 of a second bandwidth BW2, and the remaining 2/3 BW2 is allocated to a third connection C3. FIG. 6C shows two connections C1, C2 distributed over two bandwidths BW1, BW2. The first connection C1 requires 2/3 BW2. The second connection C2 requires more BW than is than the available BW2, so a first portion of the second connection C2 uses all of BW2, and the remaining second portion of the second connection C2 uses the 1/3 BW1 that is not used by the first connection C1.

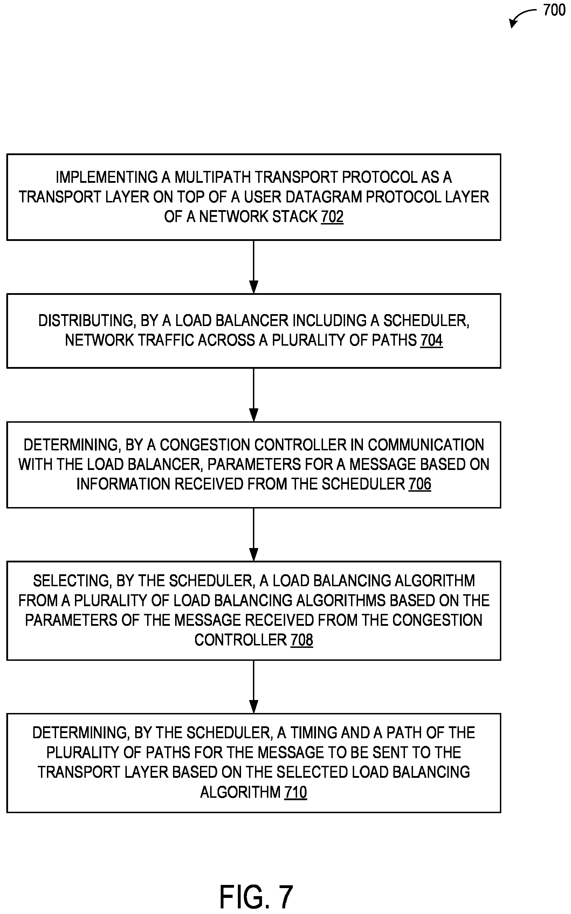

FIG. 7 shows a flowchart for a method 700 for flexible load balancing on a multipath network. Method 700 may be implemented by the hardware and software of computing system 10 described above, or by other suitable hardware and software. At step 702, the method 700 may include implementing a multipath transport protocol as a transport layer on top of a user datagram protocol layer of a network stack. Proceeding from step 702 to step 704, the method 700 may further include distributing, by a load balancer including a scheduler, network traffic across a plurality of paths. Distributing network traffic avoids congestion when transmitting a message from a sender computing device to a receiver computing device.

Advancing from step 704 to step 706, the method 700 may further include determining, by a congestion controller in communication with the load balancer, parameters for a message based on information received from the scheduler. As discussed above, the load balancer and the congestion controller may comprise a closed loop with positive feedback from the load balancer to the congestion controller. The information received from the scheduler may include at least one of a priority and packet loss awareness.

Continuing from step 706 to step 708, the method 700 may further include selecting, by the scheduler, a load balancing algorithm from a plurality of load balancing algorithms based on the parameters of the message received from the congestion controller. The plurality of load balancing algorithms may include an earliest completion first algorithm, a delayed decision making algorithm, and a most stable path algorithm.

The scheduler may also select a scheduling algorithm from a plurality of scheduling algorithms. The plurality of scheduling algorithms may include a round robin algorithm, a weighted round robin algorithm, a minimum message size algorithm, a least packet lost algorithm, a minimum round trip time algorithm, and a minimum smoothed round trip time algorithm.

A path monitor may select a congestion control algorithm for each path of the plurality of paths from a plurality of congestion control algorithms based on path information. The path information may include a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate. The congestion control algorithms may determine a path status for each respective path based on the path information.

Proceeding from step 708 to step 710, the method 700 may further include determining, by the scheduler, a timing and a path of the plurality of paths for the message to be sent to the transport layer based on the selected load balancing algorithm.

In some embodiments, the methods and processes described herein may be tied to a computing system of one or more computing devices. In particular, such methods and processes may be implemented as a computer-application program or service, an application-programming interface (API), a library, and/or other computer-program product.

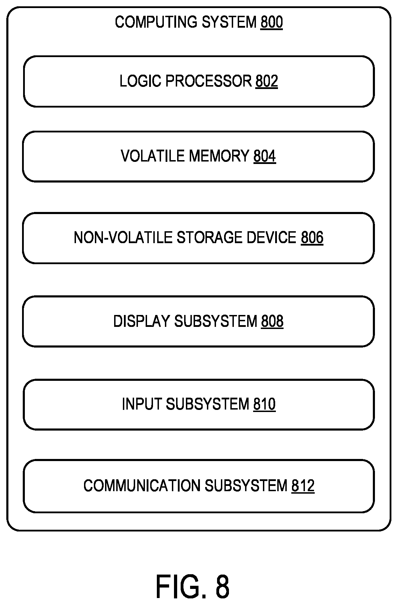

FIG. 8 schematically shows a non-limiting embodiment of a computing system 800 that can enact one or more of the methods and processes described above. Computing system 800 is shown in simplified form. Computing system 800 may embody the computer device 10 described above and illustrated in FIG. 1. Computing system 800 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 800 includes a logic processor 802 volatile memory 804, and a non-volatile storage device 806. Computing system 800 may optionally include a display subsystem 808, input subsystem 810, communication subsystem 812, and/or other components not shown in FIG. 8.

Logic processor 802 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 802 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 806 includes one or more physical devices configured to hold instructions executable by the logic processors to implement the methods and processes described herein. When such methods and processes are implemented, the state of non-volatile storage device 806 may be transformed-e.g., to hold different data.

Non-volatile storage device 806 may include physical devices that are removable and/or built-in. Non-volatile storage device 806 may include optical memory (e.g., CD, DVD, HD-DVD, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 806 may include nonvolatile, dynamic, static, read/write, read-only, sequential-access, location-addressable, file-addressable, and/or content-addressable devices. It will be appreciated that non-volatile storage device 806 is configured to hold instructions even when power is cut to the non-volatile storage device 806.

Volatile memory 804 may include physical devices that include random access memory. Volatile memory 804 is typically utilized by logic processor 802 to temporarily store information during processing of software instructions. It will be appreciated that volatile memory 804 typically does not continue to store instructions when power is cut to the volatile memory 804.

Aspects of logic processor 802, volatile memory 804, and non-volatile storage device 806 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 800 typically implemented in software by a processor to perform a particular function using portions of volatile memory, which function involves transformative processing that specially configures the processor to perform the function. Thus, a module, program, or engine may be instantiated via logic processor 802 executing instructions held by non-volatile storage device 806, using portions of volatile memory 804. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 808 may be used to present a visual representation of data held by non-volatile storage device 806. The visual representation may take the form of a graphical user interface (GUI). As the herein described methods and processes change the data held by the non-volatile storage device, and thus transform the state of the non-volatile storage device, the state of display subsystem 808 may likewise be transformed to visually represent changes in the underlying data. Display subsystem 808 may include one or more display devices utilizing virtually any type of technology. Such display devices may be combined with logic processor 802, volatile memory 804, and/or non-volatile storage device 806 in a shared enclosure, or such display devices may be peripheral display devices.

When included, input subsystem 810 may comprise or interface with one or more user-input devices such as a keyboard, mouse, touch screen, touch pad, camera, or microphone.

When included, communication subsystem 812 may be configured to communicatively couple various computing devices described herein with each other, and with other devices. Communication subsystem 812 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 800 to send and/or receive messages to and/or from other devices via a network such as the Internet.

The following paragraphs provide additional description of aspects of the present disclosure. One aspect provides a computing system for flexible load balancing on a multipath network. The computing system may comprise a processor, a load balancer, and a congestion controller. The processor may execute instructions using portions of associated memory to implement a multipath transport protocol. The multipath transport protocol may be implemented as a transport layer on top of a user datagram protocol layer of a network stack. The load balancer may distribute network traffic across a plurality of paths. The load balancer may include a scheduler. The congestion controller may be in communication with the load balancer, and the congestion controller may be configured to determine parameters for a message based on information received from the scheduler. The scheduler may select a load balancing algorithm from a plurality of load balancing algorithms based on the parameters of the message received from the congestion controller. Based on the selected load balancing algorithm, the scheduler may determine a timing and a path of the plurality of paths for the message to be sent to the transport layer.

In this aspect, additionally or alternatively, the load balancer and the congestion controller may comprise a closed loop with positive feedback from the load balancer to the congestion controller.

In this aspect, additionally or alternatively, the plurality of load balancing algorithms may include an earliest completion first algorithm, a delayed decision making algorithm, and a most stable path algorithm.

In this aspect, additionally or alternatively, the information may include at least one of priority and packet loss awareness.

In this aspect, additionally or alternatively, the scheduler may be further configured to select a scheduling algorithm from a plurality of scheduling algorithms.

In this aspect, additionally or alternatively, the plurality of scheduling algorithms may include a round robin algorithm, a weighted round robin algorithm, a minimum message size algorithm, a least packet lost algorithm, a minimum round trip time algorithm, and a minimum smoothed round trip time algorithm.

In this aspect, additionally or alternatively, the system may further comprise a path monitor. The path monitor may be configured to receive path information. The path information may include a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate.

In this aspect, additionally or alternatively, the path monitor may be further configured to select a congestion control algorithm for each path of the plurality of paths from a plurality of congestion control algorithms based on the path information.

In this aspect, additionally or alternatively, the selected congestion control algorithms may determine a path status for each respective path based on the path information. The selected load balancing algorithm may determine if a message will be sent to the transport layer, and when the message is sent.

In this aspect, additionally or alternatively, when the processor receives an acknowledgement for receipt of a sent message, the congestion controller may be configured to increase a congestion window size by 1/n, with n being the number of paths.

Another aspect provides a method for flexible load balancing on a multipath network. The method may comprise implementing a multipath transport protocol as a transport layer on top of a user datagram protocol layer of a network stack; distributing, by a load balancer including a scheduler, network traffic across a plurality of paths; determining, by a congestion controller in communication with the load balancer, parameters for a message based on information received from the scheduler; selecting, by the scheduler, a load balancing algorithm from a plurality of load balancing algorithms based on the parameters of the message received from the congestion controller; and determining, by the scheduler, a timing and a path of the plurality of paths for the message to be sent to the transport layer based on the selected load balancing algorithm.

In this aspect, additionally or alternatively, the load balancer and the congestion controller may comprise a closed loop with positive feedback from the load balancer to the congestion controller.

In this aspect, additionally or alternatively, the plurality of load balancing algorithms may include an earliest completion first algorithm, a delayed decision making algorithm, and a most stable path algorithm.

In this aspect, additionally or alternatively, the method may further comprise including in the information at least one of a priority and packet loss awareness.

In this aspect, additionally or alternatively, the method may further comprise selecting, by the scheduler, a scheduling algorithm from a plurality of scheduling algorithms.

In this aspect, additionally or alternatively, the plurality of scheduling algorithms may include a round robin algorithm, a weighted round robin algorithm, a minimum message size algorithm, a least packet lost algorithm, a minimum round trip time algorithm, and a minimum smoothed round trip time algorithm.

In this aspect, additionally or alternatively, the method may further comprise receiving, by a path monitor, path information including a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate.

In this aspect, additionally or alternatively, the method may further comprise selecting, by the path monitor, a congestion control algorithm for each path of the plurality of paths from a plurality of congestion control algorithms based on the path information.

In this aspect, additionally or alternatively, the method may further comprise determining, by the selected congestion control algorithms, a path status for each respective path based on the path information.

Another aspect provides a computing system for flexible load balancing on a multipath network. The computing system may comprise a processor, a load balancer, a congestion controller, and a path monitor. The processor may execute instructions using portions of associated memory to implement a multipath transport protocol. The multipath transport protocol may be implemented as a transport layer on top of a user datagram protocol layer of a network stack. The load balancer may distribute network traffic across a plurality of paths. The load balancer may include a scheduler. The congestion controller may be in communication with the load balancer, and the congestion controller may be configured to determine parameters for a message based on information received from the scheduler. The path monitor may be configured to receive path information. The load balancer and the congestion controller may comprise a closed loop with positive feedback from the load balancer to the congestion controller. The scheduler may select a load balancing algorithm from a plurality of load balancing algorithms based on the parameters of the message received from the congestion controller. The path monitor may select a congestion control algorithm for each path of the plurality of paths from a plurality of congestion control algorithms based on the path information. A timing and a path of the plurality of paths for the message to be sent to the transport layer may be determined based on the selected load balancing algorithm and the selected congestion control algorithm.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A computing device (12, 18) in a computing system (10) for flexible load balancing of messages and/or packets to be sent simultaneously across a plurality of paths P of a multipath network between a sender and a receiver, comprising:
a processor configured to execute instructions using portions of associated memory to implement a multipath transport protocol, the multipath transport protocol being implemented as a transport layer on top of a user datagram protocol layer of a network stack;
a load balancer (28) configured to distribute network traffic across the plurality of paths, the load balancer (28) including a scheduler (46) that receives information about a message; and
a congestion controller (30) in communication with the load balancer (28), the congestion controller (30) being configured to determine parameters (50) for the message based on the information about the message received from the scheduler (46), wherein
the scheduler (46) is configured to select a load balancing algorithm from a plurality of load balancing algorithms based on the parameters (50) of the message received from the congestion controller (30), and
based on the selected load balancing algorithm, determine a timing and a path of the plurality of paths for the message to be sent to the transport layer,
**characterized by**:
a path monitor (56) configured to receive path information (58) for each path P in the multipath network, wherein the path monitor is further configured to select a congestion control algorithm for each path P from a congestion control algorithm pool (60) of the congestion controller (30) comprising a plurality of congestion control algorithms based on the path information (58); and
the congestion controller is configured to determine whether at least one of the selected congestion control algorithms and/or congestion control parameters needs to be changed based on the information about the message, such that the communication between the load balancer (28) and the congestion controller (30) is a closed loop with positive feedback from the load balancer (28) to the congestion controller (30).

2. The computing device (12, 18) of claim 1, wherein
the plurality of load balancing algorithms includes an earliest completion first algorithm, a delayed decision making algorithm, and a most stable path algorithm, and optionally wherein the information includes at least one of priority and packet loss awareness.

3. The computing device (12, 18) of claim 1, wherein
the scheduler (46) is further configured to select a scheduling algorithm from a plurality of scheduling algorithms, and optionally wherein the plurality of scheduling algorithms includes a round robin algorithm, a weighted round robin algorithm, a minimum message size algorithm, a least packet lost algorithm, a minimum round trip time algorithm, and a minimum smoothed round trip time algorithm.

4. The computing device (12, 18) of claim 1, wherein
the information received by the path monitor includes a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate.

5. The computing device (12, 18) of claim 1, wherein
the selected congestion control algorithms determine a path status for each respective path based on the path information and the selected load balancing algorithm determines if a message will be sent to the transport layer, and when the message is sent.

6. The computing device (12, 18) of claim 1, wherein
when the processor receives an acknowledgement for receipt of a sent message, the congestion controller (30) is configured to increase a congestion window size by 1/n, with n being the number of paths.

7. A method (700) carried out in a computing device (12, 18) in a computing system (10) for flexible load balancing of messages and/or packets to be sent simultaneously across a plurality of paths P of a multipath network between a sender and a receiver, the method (700) comprising:
implementing (702) a multipath transport protocol as a transport layer on top of a user datagram protocol layer of a network stack;
distributing (704), by a load balancer (28) including a scheduler (46) that receives information about a message, network traffic across the plurality of paths;
determining (706), by a congestion controller (30) in communication with the load balancer (28), parameters (50) for the message based on the information about the message received from the scheduler (46);
selecting (708), by the scheduler (46), a load balancing algorithm from a plurality of load balancing algorithms based on the parameters (50) of the message received from the congestion controller (30);
determining (710), by the scheduler (46), a timing and a path of the plurality of paths for the message to be sent to the transport layer based on the selected load balancing algorithm,
**characterized by**:
receiving, by a path monitor (56), path information (58) for each path P in the multipath network;
selecting, by the path monitor, a congestion control algorithm for each path P from a congestion control algorithm pool (60) of the congestion controller (30) comprising a plurality of congestion control algorithms based on the path information (58); and
determining, by the congestion controller, whether at least one of a selected congestion control algorithm and/or a congestion control parameter needs to be changed based on the information about the message, as such, the communication between the load balancer (28) and the congestion controller (30) is a closed loop with positive feedback from the load balancer (28) to the congestion controller (30).

8. The method (700) of claim 7, the method (700) further comprising:
including in the information at least one of a priority and packet loss awareness, optional wherein the plurality of load balancing algorithms includes an earliest completion first algorithm, a delayed decision making algorithm, and a most stable path algorithm.

9. The method (700) of claim 7, the method (700) further comprising:
selecting, by the scheduler, a scheduling algorithm from a plurality of scheduling algorithms, optionally wherein the plurality of scheduling algorithms includes a round robin algorithm, a weighted round robin algorithm, a minimum message size algorithm, a least packet lost algorithm, a minimum round trip time algorithm, and a minimum smoothed round trip time algorithm.

10. The method (700) of claim 7, wherein
the information received by the path monitor includes a number of in-flight messages, a total remaining size of messaged waiting to be transferred, an average round trip time, a most recent round trip time, a shortest round trip time, an average sending rate without congestion, a most recent sending rate without congestion, a congestion notification, and a packet loss rate.

11. The method (700) of claim 7, wherein
determining, by the selected load balancing algorithm, if a message will be sent to the transport layer, and when the message is sent.

12. The method (700) of claim 7, the method (700) further comprising:
determining, by the selected congestion control algorithms, a path status for each respective path based on the path information.

13. A non-transitory computer-readable medium having computer-executable instructions stored thereon that, upon execution, causes a computing device (12, 18) to perform the method according to any of claims 7-12.

## Patentansprüche

1. Rechenvorrichtung (12, 18) in einem Rechensystem (10) zur flexiblen Lastverteilung von Nachrichten und/oder Paketen, die gleichzeitig über mehrere Wege P eines Mehrwegenetzwerks zwischen einem Sender und einem Empfänger gesendet werden sollen, umfassend:
einen Prozessor, der dazu konfiguriert ist, Anweisungen unter Verwendung von Teilen eines zugehörigen Speichers auszuführen, um ein Mehrwegetransportprotokoll zu implementieren, wobei das Mehrwegetransportprotokoll als eine Transportschicht über einer Benutzerdatagrammprotokollschicht eines Netzwerkstapels implementiert ist;
einen Lastverteiler (28), der dazu konfiguriert ist, Netzwerkverkehr auf die mehreren Wege zu verteilen, wobei der Lastverteiler (28) einen Scheduler (46) beinhaltet, der Informationen über eine Nachricht empfängt; und
eine Überbelegungssteuereinheit (30) in Kommunikation mit dem Lastverteiler (28), wobei die Überbelegungssteuereinheit (30) dazu konfiguriert ist, Parameter (50) für die Nachricht basierend auf den Informationen über die Nachricht, die vom Scheduler (46) empfangen werden, zu bestimmen, wobei
der Scheduler (46) dazu konfiguriert ist, einen Lastausgleichsalgorithmus aus mehreren Lastausgleichsalgorithmen basierend auf den Parametern (50) der Nachricht auszuwählen, die von der Überbelegungssteuereinheit (30) empfangen wird, und
basierend auf dem ausgewählten Lastausgleichsalgorithmus einen Zeitablauf und einen Weg der mehreren Wege für die Nachricht zu bestimmen, die an die Transportschicht gesendet werden soll, **gekennzeichnet durch**:
einen Wegmonitor (56), der dazu konfiguriert ist, Wegeinformationen (58) für jeden Weg P im Mehrwegenetzwerk zu empfangen, wobei der Wegmonitor ferner dazu konfiguriert ist, für jeden Weg P einen Überbelegungssteueralgorithmus aus einem Überbelegungsalgorithmus-Pool (60) der Überbelegungssteuereinheit (30), der mehrere Überbelegungssteueralgorithmen umfasst, basierend auf den Wegeinformationen (58) auszuwählen; und
die Überbelegungssteuereinheit dazu konfiguriert ist, zu bestimmen, ob mindestens einer der ausgewählten Überbelegungsalgorithmen und/oder der Überbelegungssteuerparameter basierend auf den Informationen über die Nachricht geändert werden muss, sodass die Kommunikation zwischen dem Lastverteiler (28) und der Überbelegungssteuereinheit (30) eine geschlossene Schleife mit positiver Rückkopplung vom Lastverteiler (28) zur Überbelegungssteuereinheit (30) ist.

2. Rechenvorrichtung (12, 18) nach Anspruch 1, wobei
die mehreren Lastverteilungsalgorithmen einen Algorithmus, der die früheste Fertigstellung zuerst vornimmt, einen Algorithmus, der verzögerte Entscheidungen trifft, und einen Algorithmus, der den stabilsten Weg ermittelt, beinhalten, und wobei die Informationen optional mindestens eines von Priorität und Paketverlustbewusstsein beinhalten.

3. Rechenvorrichtung (12, 18) nach Anspruch 1, wobei
der Scheduler (46) ferner dazu konfiguriert ist, einen Scheduling-Algorithmus aus mehreren Scheduling-Algorithmen auszuwählen, und wobei die mehreren Scheduling-Algorithmen optional einen Round-Robin-Algorithmus, einen gewichteten Round-Robin-Algorithmus, einen Algorithmus für minimale Nachrichtengröße, einen Algorithmus für minimalen Paketverlust, einen Algorithmus für minimale Umlaufzeit und einen Algorithmus für minimale geglättete Umlaufzeit beinhalten.

4. Rechenvorrichtung (12, 18) nach Anspruch 1, wobei
die vom Wegmonitor empfangenen Informationen eine Anzahl in Bearbeitung befindlicher Nachrichten, eine Gesamtgröße noch zu übertragender Nachrichten, eine durchschnittliche Umlaufzeit, eine zuletzt gemessene Umlaufzeit, eine kürzeste Umlaufzeit, eine durchschnittliche Senderate ohne Überbelegung, eine zuletzt gemessene Senderate ohne Überbelegung, eine Überbelegungsbenachrichtigung und eine Paketverlustrate beinhalten.

5. Rechenvorrichtung (12, 18) nach Anspruch 1, wobei
die ausgewählten Überbelegungssteueralgorithmen basierend auf den Wegeinformationen einen Wegstatus für jeden jeweiligen Weg bestimmen, und der ausgewählte Lastverteilungsalgorithmus bestimmt, ob eine Nachricht an die Transportschicht gesendet wird und wann die Nachricht gesendet wird.

6. Rechenvorrichtung (12, 18) nach Anspruch 1, wobei
wenn der Prozessor eine Empfangsbestätigung für eine gesendete Nachricht empfängt, die Überbelegungssteuereinheit (30) dazu konfiguriert ist, eine Überbelegungsfenstergröße um 1/n zu erhöhen, wobei n die Anzahl von Wegen ist.

7. Verfahren (700), das in einer Rechenvorrichtung (12, 18) in einem Rechensystem (10) zur flexiblen Lastverteilung von Nachrichten und/oder Paketen umgesetzt wird, die gleichzeitig über mehrere Wege P eines Mehrwegenetzwerks zwischen einem Sender und einem Empfänger gesendet werden sollen, wobei das Verfahren (700) Folgendes umfasst:
Implementieren (702) eines Mehrwegetransportprotokolls als eine Transportschicht über einer Benutzerdatagrammprotokollschicht eines Netzwerkstapels;
Verteilen (704), mittels eines Lastverteilers, (28) der einen Scheduler (46) beinhaltet, der Informationen über eine Nachricht empfängt, von Netzwerkverkehr über die mehreren Wege;
Bestimmen (706), durch eine Überbelegungssteuereinheit (30) in Kommunikation mit dem Lastverteiler (28), von Parametern (50) für die Nachricht, basierend auf den Informationen über die Nachricht, die vom Scheduler (46) empfangen wird;
Auswählen (708), durch den Scheduler (46), eines Lastausgleichsalgorithmus aus mehreren Lastausgleichsalgorithmen, basierend auf den Parametern (50) der Nachricht, die von der Überbelegungssteuereinheit (30) empfangen wird;
Bestimmen (710), durch den Scheduler (46), eines Zeitablaufs und eines Wegs der mehreren Wege für die Nachricht, die an die Transportschicht gesendet werden soll, basierend auf dem ausgewählten Lastverteilungsalgorithmus,
**gekennzeichnet durch**:
Empfangen, durch einen Wegmonitor (56), von Wegeinformationen (58) für jeden Weg P im Mehrwegenetzwerk;
Auswählen, durch den Wegmonitor, eines Überbelegungssteueralgorithmus aus einem Überbelegungsalgorithmus-Pool (60) der Überbelegungssteuereinheit (30), der mehrere Überbelegungssteueralgorithmen umfasst, basierend auf den Wegeinformationen (58); und
Bestimmen, durch die Überbelegungssteuereinheit, ob mindestens einer eines ausgewählten Überbelegungsalgorithmus und/oder eines Überbelegungssteuerparameters basierend auf den Informationen über die Nachricht geändert werden muss, damit die Kommunikation zwischen dem Lastverteiler (28) und der Überbelegungssteuereinheit (30) eine geschlossene Schleife mit positiver Rückkopplung vom Lastverteiler (28) zur Überbelegungssteuereinheit (30) ist.

8. Verfahren (700) nach Anspruch 7, das Verfahren (700) weiter umfassend:
Einschließen mindestens eines von einer Priorität und einem Paketverlustbewusstsein in die Informationen, wobei optional die mehreren Lastverteilungsalgorithmen einen Algorithmus, der die früheste Fertigstellung zuerst vornimmt, einen Algorithmus, der verzögerte Entscheidungen trifft, und einen Algorithmus, der den stabilsten Weg ermittelt, beinhalten.

9. Verfahren (700) nach Anspruch 7, das Verfahren (700) weiter umfassend:
Auswählen, durch den Scheduler, eines Scheduling-Algorithmus aus mehreren Scheduling-Algorithmen, wobei die mehreren Scheduling-Algorithmen optional einen Round-Robin-Algorithmus, einen gewichteten Round-Robin-Algorithmus, einen Algorithmus für minimale Nachrichtengröße, einen Algorithmus für minimalen Paketverlust, einen Algorithmus für minimale Umlaufzeit und einen Algorithmus für minimale geglättete Umlaufzeit beinhalten.

10. Verfahren (700) nach Anspruch 7, wobei
die vom Wegmonitor empfangenen Informationen eine Anzahl in Bearbeitung befindlicher Nachrichten, eine Gesamtgröße noch zu übertragender Nachrichten, eine durchschnittliche Umlaufzeit, eine zuletzt gemessene Umlaufzeit, eine kürzeste Umlaufzeit, eine durchschnittliche Senderate ohne Überbelegung, eine zuletzt gemessene Senderate ohne Überbelegung, eine Überbelegungsbenachrichtigung und eine Paketverlustrate beinhalten.

11. Verfahren (700) nach Anspruch 7, wobei
Bestimmen, durch den ausgewählten Lastverteilungsalgorithmus, ob eine Nachricht an die Transportschicht gesendet wird und wann die Nachricht gesendet wird.

12. Verfahren (700) nach Anspruch 7, das Verfahren (700) weiter umfassend:
Bestimmen, durch die ausgewählten Überbelegungssteueralgorithmen, eines Wegstatus für jeden jeweiligen Weg, basierend auf den Wegeinformationen.

13. Nichtflüchtiges computerlesbares Medium, das computerausführbare Anweisungen darauf gespeichert aufweist, das bei Ausführung eine Rechenvorrichtung (12, 18) dazu veranlasst, das Verfahren nach einem der Ansprüche 7-12 durchzuführen.

## Revendications

1. Dispositif informatique (12, 18) dans un système informatique (10) pour l'équilibrage de charge flexible des messages et/ou paquets à envoyer simultanément par plusieurs chemins P d'un réseau à chemins multiples entre un émetteur et un récepteur, comprenant :
un processeur configuré pour exécuter des instructions en utilisant des portions de mémoire associée pour mettre en œuvre un protocole de transport à chemins multiples, le protocole de transport à chemins multiples étant mis en œuvre comme une couche de transport au-dessus d'une couche de protocole de datagramme utilisateur d'un empilement réseau ;
un équilibreur de charge (28) configuré pour répartir le trafic réseau sur la pluralité des chemins, l'équilibreur de charge (28) incluant un planificateur (46) qui reçoit des informations concernant un message ; et
un contrôleur de congestion (30) en communication avec l'équilibreur de charge (28), le contrôleur de congestion (30) étant configuré pour déterminer des paramètres (50) du message en fonction des informations concernant le message reçues du planificateur (46), dans lequel
le planificateur (46) est configuré pour sélectionner un algorithme d'équilibrage de charge parmi une pluralité d'algorithmes d'équilibrage de charge en fonction des paramètres (50) du message reçu du contrôleur de congestion (30), et
en fonction de l'algorithme d'équilibrage de charge sélectionné, déterminer un moment et un chemin parmi les multiples chemins possibles pour l'envoi du message à la couche de transport, **caractérisé par** :
un moniteur de chemin (56) configuré pour recevoir des informations de chemin (58) pour chaque chemin P du réseau à chemins multiples, dans lequel le moniteur de chemin est en outre configuré pour sélectionner un algorithme de contrôle de congestion pour chaque chemin P à partir d'un ensemble d'algorithmes de contrôle de congestion (60) du contrôleur de congestion (30) comprenant une pluralité d'algorithmes de contrôle de congestion basés sur les informations de chemin (58) ; et
le contrôleur de congestion est configuré pour déterminer si au moins un des algorithmes de contrôle de congestion et/ou des paramètres de contrôle de la congestion sélectionnés doivent être modifiés en fonction des informations concernant le message, de sorte que la communication entre l'équilibreur de charge (28) et le contrôleur de congestion (30) soit une boucle fermée avec un retour d'information positif de l'équilibreur de charge (28) vers le contrôleur de congestion (30).

2. Dispositif informatique (12, 18) selon la revendication 1, dans lequel
la pluralité des algorithmes d'équilibrage de charge inclut un premier algorithme de premier achèvement, un algorithme de prise de décision différée et un algorithme de chemin le plus stable, et éventuellement dans lequel les informations incluent au moins une des notions de priorité et de prise en compte des pertes de paquets.

3. Dispositif informatique (12, 18) selon la revendication 1, dans lequel
le planificateur (46) est en outre configuré pour sélectionner un algorithme de planification parmi une pluralité d'algorithmes de planification, et en option, dans lequel la pluralité d'algorithmes de planification incluent un algorithme round robin, un algorithme round robin pondéré, un algorithme de taille de message minimale, un algorithme de perte de paquets minimale, un algorithme de temps d'aller-retour minimal et un algorithme de temps d'aller-retour lissé minimal.

4. Dispositif informatique (12, 18) selon la revendication 1, dans lequel
les informations reçues par le moniteur de chemin incluent un nombre de messages en vol, une taille totale restante des messages en attente de transfert, un temps d'aller-retour moyen, un temps d'aller-retour le plus récent, un temps d'aller-retour le plus court, un débit d'envoi moyen sans congestion, un débit d'envoi le plus récent sans congestion, une notification de congestion et un taux de perte de paquets.

5. Dispositif informatique (12, 18) selon la revendication 1, dans lequel
les algorithmes de contrôle de congestion sélectionnés déterminent l'état de chaque chemin respectif en fonction des informations de chemin, et l'algorithme d'équilibrage de charge sélectionné détermine si un message sera envoyé à la couche de transport, et quand le message est envoyé.

6. Dispositif informatique (12, 18) selon la revendication 1, dans lequel
lorsque le processeur reçoit un accusé de réception d'un message envoyé, le contrôleur de congestion (30) est configuré pour augmenter la taille de la fenêtre de congestion de 1/n, n étant le nombre de chemins.

7. Procédé (700) mis en œuvre dans un dispositif informatique (12, 18) au sein d'un système informatique (10) pour l'équilibrage de charge flexible de messages et/ou de paquets à envoyer simultanément sur plusieurs chemins P d'un réseau à chemins multiples entre un émetteur et un récepteur, le procédé (700) comprenant :
la mise en œuvre (702) d'un protocole de transport à chemins multiples, en tant que couche de transport au-dessus d'une couche de protocole de datagramme utilisateur d'un empilement réseau ;
la répartition (704), par un équilibreur de charge (28) incluant un planificateur (46) qui reçoit des informations sur un message, d'un trafic réseau à travers la pluralité de chemins ;
la détermination (706), par un contrôleur de congestion (30) en communication avec l'équilibreur de charge (28), de paramètres (50) du message en fonction des informations sur le message reçues du planificateur (46) ;
la sélection (708), par le planificateur (46), d'un algorithme d'équilibrage de charge parmi une pluralité d'algorithmes d'équilibrage de charge en fonction des paramètres (50) du message reçu du contrôleur de congestion (30) ;
la détermination (710), par le planificateur (46), d'un moment et d'un chemin parmi la pluralité de chemins pour que le message soit envoyé à la couche de transport en fonction de l'algorithme d'équilibrage de charge sélectionné,
**caractérisé par** :
la réception, par un moniteur de chemin (56), d'informations de chemin (58) pour chaque chemin P dans le réseau à chemins multiples ;
la sélection, par le moniteur de chemin, d'un algorithme de contrôle de congestion pour chaque chemin P à partir d'un ensemble d'algorithmes de contrôle de congestion (60) du contrôleur de congestion (30) comprenant une pluralité d'algorithmes de contrôle de congestion basés sur les informations de chemin (58) ; et
la détermination, par le contrôleur de congestion, si au moins un algorithme de contrôle de congestion sélectionné et/ou un paramètre de contrôle de congestion doit être modifié en fonction des informations concernant le message, de sorte que la communication entre l'équilibreur de charge (28) et le contrôleur de congestion (30) soit une boucle fermée avec un retour d'informations positif de l'équilibreur de charge (28) au contrôleur de congestion (30).

8. Procédé (700) selon la revendication 7, le procédé (700) comprenant en outre :
l'inclusion, dans les informations, d'au moins un des algorithmes de priorité et de prise en compte des pertes de paquets, en option, dans lequel la pluralité d'algorithmes d'équilibrage de charge incluent un premier algorithme de premier achèvement, un algorithme de prise de décision différée et un algorithme de chemin le plus stable.

9. Procédé (700) selon la revendication 7, le procédé (700) comprenant en outre :
la sélection, par le planificateur, d'un algorithme de planification parmi une pluralité d'algorithmes de planification, dans lequel la pluralité d'algorithmes de planification incluent éventuellement un algorithme round robin, un algorithme round robin pondéré, un algorithme de taille de message minimale, un algorithme de perte de paquets minimale, un algorithme de temps d'aller-retour minimal et un algorithme de temps d'aller-retour lissé minimal.

10. Procédé (700) selon la revendication 7, dans lequel :
les informations reçues par le moniteur de chemin incluent un nombre de messages en vol, une taille totale restante des messages en attente de transfert, un temps d'aller-retour moyen, un temps d'aller-retour le plus récent, un temps d'aller-retour le plus court, un débit d'envoi moyen sans congestion, un débit d'envoi le plus récent sans congestion, une notification de congestion et un taux de perte de paquets.

11. Procédé (700) selon la revendication 7, dans lequel :
la détermination, par l'algorithme d'équilibrage de charge sélectionné, si un message sera envoyé à la couche de transport, et quand le message est envoyé.

12. Procédé (700) selon la revendication 7, le procédé (700) comprenant en outre :
la détermination, par les algorithmes de contrôle de congestion sélectionnés, d'un statut de chemin pour chaque chemin respectif en fonction des informations du chemin.

13. Support de stockage non transitoire lisible par ordinateur sur lequel sont stockées des instructions exécutables par ordinateur qui, lorsqu'elles sont exécutées, amènent un dispositif informatique (12, 18) à exécuter le procédé selon l'une quelconque des revendications 7 à 12.
